# EUROPÄISCHE PATENTSCHRIFT

(11) **EP 3 395 052 B1**
(45) Veröffentlichungstag und Bekanntmachung des Hinweises auf die Patenterteilung: **20.11.2019**
(21) Anmeldenummer: 16826032.1
(22) Anmeldetag: 21.12.2016
(51) Int. Cl.: H04M 1/60, H04M 3/56, H04M 1/62, H01M 2/10, H01M 2/30

(54) **MOBILES KONFERENZSYSTEM**
MOBILE CONFERENCE SYSTEM
SYSTÈME DE CONFÉRENCE MOBILE

(30) Priorität: 23.12.2015 DE 102015122759
(43) Veröffentlichungstag der Anmeldung: 31.10.2018
(73) Patentinhaber: Sennheiser Communications A/S, 2750 Ballerup (DK); Sennheiser electronic GmbH & Co. KG, 30900 Wedemark (DE)
(72) Erfinder: GOSSEN, Alex, 30167 Hannover (DE); SCHOLZ, Andre, 31135 Hildesheim (DE); MÜLLER, Andreas, 46459 Rees (DE); DITTER, David, 20253 Hamburg (DE); ENGELKING, Dirk, 30916 Isernhagen (DE); LOGEMANN, Fabian, 30451 Hannover (DE); BATTIS, Ingo, 30900 Wedemark (DE); DETAY, Jean-Christophe, 30449 Hannover (DE); TOBIEN, Jens, 30173 Hannover (DE); WERNER, Jens, 30163 Hannover (DE); ZASTROW, Jérôme-Etienne, 30938 Burgwedel (DE); MANGOLD, Marc, 30167 Hannover (DE); REITINGER, Mike, 30916 Isernhagen (DE); KHOURY, Najib, 12169 Berlin (DE); CHRISTIANSEN, Torben, 2100 Copenhagen East (DK); MENSENDIEK, Wienand, 33699 Bielefeld (DE); RÖSELER, Jan-Phillip, 31134 Hildesheim (DE)
(74) Vertreter: Eisenführ Speiser
(86) Internationale Anmeldenummer: PCT/EP2016/082099
(87) Internationale Veröffentlichungsnummer: WO 2017/108903

(56) Entgegenhaltungen:
- EP-A1- 2 426 903
- EP-A1- 2 538 611
- EP-A1- 2 755 368
- US-A1- 2012 014 534
- US-A1- 2013 316 752

## Beschreibung

Die vorliegende Erfindung betrifft ein mobiles Konferenzsystem.

Herkömmliche Konferenzsysteme sind typischerweise fest verdrahtet und benötigen eine aufwendige Initialisierung. Derartige Konferenzsysteme sind somit beschränkt einsetzbar und können typischerweise nur von geschultem Personal initialisiert werden.

Es ist eine Aufgabe der vorliegenden Erfindung ein mobiles Konferenzsystem vorzusehen, welches flexibel einsetzbar ist und ohne großen Aufwand initialisiert und gestartet werden kann.

In der prioritätsbegründenden deutschen Patentanmeldung hat das Deutsche Patent- und Markenamt das folgende Dokument recherchiert: US 2009/0264114 A1. Weiterer Stand der Technik ist den Dokumenten EP 2 755 368, US 2012/014534 A1 und US 2013/316752 A1 zu entnehmen.

Diese Aufgabe wird durch ein Konferenzsystem nach Anspruch 1 gelöst.

Es wird ein mobiles Konferenzsystem vorgesehen, das eine erste mobile Master-Freisprecheinheit und mindestens eine zweite mobile Slave-Freisprecheinheit aufweist, welche jeweils mindestens ein Mikrofon zur Aufzeichnung von Audiosignalen, einen Lautsprecher zur Wiedergabe von wiederzugebenen Audiosignalen, eine Akkumulatoreinheit zur Energieversorgung, eine Bedieneinheit, mindestens eine Leuchteinheit und eine erste Sende/Empfangseinheit zur bidirektionalen drahtlosen Kommunikation zwischen der ersten und zweiten mobilen Freisprecheinheit aufweisen. Die erste Freisprecheinheit weist eine zweite Sende/Empfangseinheit zur drahtlosen bidirektionalen Audio-Kommunikation mit einer externen Einheit auf. Die erste Freisprecheinheit ist dazu ausgestaltet, Audiosignale, welche über die zweite Sende-/Empfangseinheit von der externen Einheit empfangen wurden, durch die erste Sende/Empfangseinheit drahtlos an die zweite mobile Freisprecheinheit zu übertragen. Die erste Freisprecheinheit ist dazu ausgestaltet, Audiosignale, welche über die erste Sende-/Empfangseinheit von der zweiten mobilen Freisprecheinheit empfangen wurden mit über das mindestens eine Mikrofon der ersten Freisprecheinheit aufgezeichneten Audiosignalen zu mischen und durch die zweite Sende/Empfangseinheit drahtlos an die externe Einheit zu senden.

Das erfindungsgemäße mobile Konferenzsystem weist eine erste mobile Freisprecheinheit (Master) und mindestens eine zweite mobile Freisprecheinheit (Slave) auf. Die erste mobile Freisprecheinheit weist eine Schnittstelle zur externen Kommunikation beispielsweise über ein Mobiltelefon oder über einen Festnetztelefonanschluss auf. Die erste mobile Freisprecheinheit (Master) weist eine zweite drahtlose Schnittstelle zur drahtlosen bidirektionalen Kommunikation mit der mindestens einen zweiten mobilen Freisprecheinheit (Slave) auf. Die zweite mobile Freisprecheinheit (Slave) weist (wie auch die erste mobile Freisprecheinheit optional) mindestens ein Mikrofon zur Aufzeichnung eines Audiosignals, mindestens einen Lautsprecher zur Wiedergabe eines wiederzugebenden Audiosignals, mindestens ein Bedienelement zum Bedienen der zweiten mobilen Freisprecheinheit, eine Steuereinheit zum Steuern der zweiten mobilen Freisprecheinheit und eine Drahtloskommunikationsschnittstelle zur bidirektionalen Kommunikation mit der ersten mobilen Freisprecheinheit. Die erste mobile Freisprecheinheit empfängt die von den Mikrofonen der zweiten mobilen Freisprecheinheiten aufgezeichneten Audiosignale, welche über die Drahtlosschnittstelle übertragen worden sind. Die erste mobile Freisprecheinheit empfängt ein externes Audiosignal über die externe Kommunikationsschnittstelle und überträgt dieses Audiosignal drahtlos an die mindestens eine mobile Freisprecheinheit, welche das Audiosignal oder zumindest Teile des Audiosignals über die Lautsprecher wiedergibt.

Die erste mobile Freisprecheinheit und die zweite mobile Freisprecheinheit weist zumindest eine Leuchteinheit auf. Der Betrieb dieser Leuchteinheiten kann durch eine Steuereinheit der ersten mobilen Freisprecheinheit (Master) gesteuert werden. Insbesondere können die Leuchten in Abhängigkeit einer eingestellten Betriebsart zentral gesteuert werden.

Gemäß einem weiteren Aspekt der vorliegenden Erfindung können durch Betätigung eines Muting-Bedienelementes alle Freisprecheinheiten gemutet werden. Dies kann durch die Leuchteinheiten entsprechend dargestellt werden. Dazu kann sich die Farbe der Leuchteinheit, die Intensität der Leuchteinheit und/oder das Blinken der Leuchteinheit verändern, sobald ein Muting der Freisprecheinheiten aktiviert ist.

Gemäß einem weiteren Aspekt der vorliegenden Erfindung kann das Muting an jeder der Freisprecheinheiten aktiviert und/oder deaktiviert werden.

Vorteile und Ausführungsbeispiele der Erfindung werden nachstehend unter Bezugnahme auf die Zeichnung näher erläutert.
- Fig. 1: zeigt eine schematische Darstellung eines mobilen Konferenzsystems gemäß einem ersten Ausführungsbeispiel,
- Fig. 2: zeigt ein Blockschaltbild einer ersten mobilen Freisprecheinheit gemäß einem zweiten Ausführungsbeispiel;
- Fig. 3: zeigt ein Blockschaltbild einer zweiten mobilen Freisprecheinheit gemäß einem dritten Ausführungsbeispiel;
- Fig. 4A - Fig. 4C: zeigen verschiedene Ansichten einer mobilen Freisprecheinheit gemäß einem vierten Ausführungsbeispiel der Erfindung;
- Fig. 5A-Fig. 5C: zeigen jeweils verschiedene Ansichten einer Lade- und Aufbewahrungseinheit für die mobilen Freisprecheinheiten gemäß der Erfindung;
- Fig. 6A und 6B: zeigen jeweils verschiedene Ansichten einer Ladeeinheit für die mobilen Freisprecheinheiten gemäß der Erfindung.

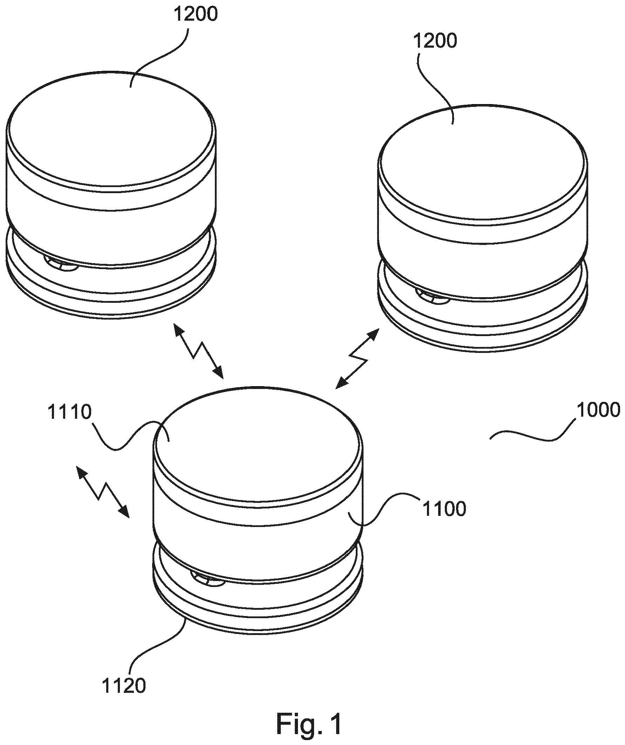

Fig. 1 zeigt eine schematische Darstellung eines mobilen Konferenzsystems gemäß einem ersten Ausführungsbeispiel. Das mobile Konferenzsystem 1000 weist eine erste mobile Freisprecheinheit (Master) 1100 und mindestens eine weitere bzw. zweite mobile Freisprecheinheit (Slave) 1200 auf.

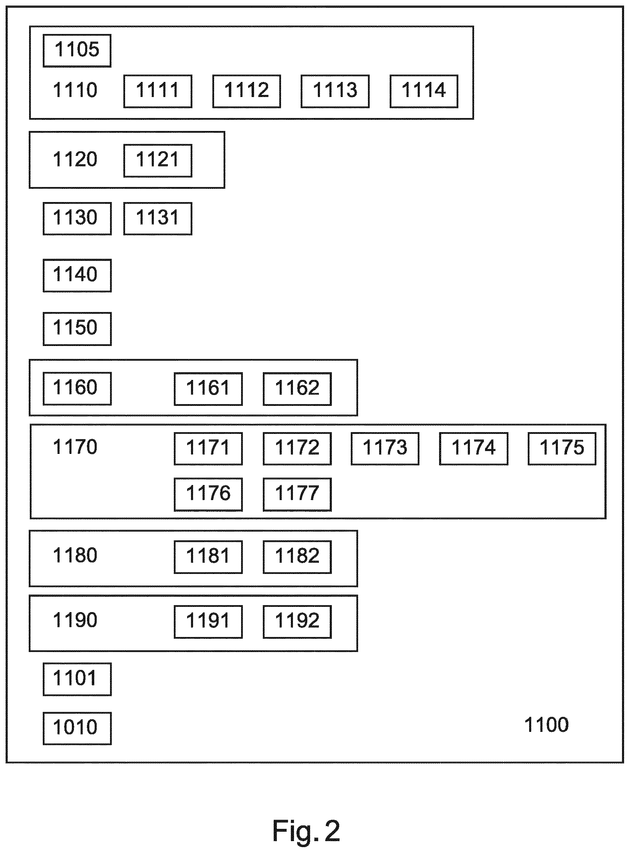

Fig. 2 zeigt ein Blockschaltbild einer ersten mobilen Freisprecheinheit gemäß einem zweiten Ausführungsbeispiel. Die erste mobile Freisprecheinheit (Master) 1100 weist eine Bedieneinheit 1110 mit einer ersten Leuchteinheit 1111, einem Lautstärkebedienelement 1112, einem Muting-Bedienelement 1113 und/oder einem Pairing-Bedienelement 1114 auf. Die erste mobile Freisprecheinheit 1100 weist eine Bodeneinheit 1120 mit einer zweiten Leuchteinheit 1121, mindestens einem Mikrofon 1130, mindestens einem Lautsprecher 1140, mindestens einer ersten Sende/Empfangseinheit 1150 auf. Die erste Sende-/Empfangseinheit 1150 kann eine drahtlose Schnittstelle beispielsweise basierend auf dem DECT-Standard darstellen und dient der Kommunikation zwischen der ersten mobilen Freisprecheinheit (Master) 1100 und den zweiten mobilen Freisprecheinheiten (Slave) 1200. Die erste mobile Freisprecheinheit (Master) weist ferner eine zweite Sende/Empfangseinheit 1160 bzw. eine zweite Drahtloskommunikationsschnittstelle 1160 auf. Die zweite Sende-/Empfangseinheit 1160 kann eine Drahtlossende/Empfangseinheit 1161 beispielsweise basierend auf dem WiFi-Protokoll oder dem Bluetooth-Protokoll und/oder eine drahtgebundene Sende/Empfangseinheit 1162, beispielsweise basierend auf einem USB-Anschluss, einem AUX-Anschluss, einem Festnetzanschluss etc. aufweisen. Die zweite Sende/Empfangseinheit 1160 dient zur bidirektionalen Übertragung von Audiosignalen zwischen dem Konferenzsystem 1000 und einer externen Fernkommunikationseinheitwie z.B. einem Smartphone.

Die erste mobile Freisprecheinheit 1100 weist ferner eine Steuereinheit 1170 zum Steuern des Betriebs der ersten und zweiten Freisprecheinheiten 1100, 1200 auf. Die Steuereinheit 1170 kann eine erste Leuchtsteuereinheit 1171 zum Steuern der Leuchteinheiten der ersten und/oder zweiten mobilen Freisprecheinheit, eine Pairing-Einheit 1172 zur Initialisierung und/oder Steuerung eines Pairings zwischen einem Mobiltelefon und der ersten mobilen Freisprecheinheit. Die Steuereinheit 1170 kann ferner eine Lautstärkesteuereinheit 1173, eine Bedienelementsteuereinheit 1174, eine Slave-Synchronisationseinheit 1175, eine Betriebsartsteuereinheit 1176 und/oder eine zweite Leuchtensteuereinheit 1177 aufweisen.

Die erste mobile Freisprecheinheit 1100 weist eine Audio-Mischeinheit 1180 mit einer ersten Audioaktivitätserfassungseinheit 1181 zum Erfassen einer Audioaktivität über die interne Schnittstelle 1150 zur Kommunikation mit den zweiten mobilen Freisprecheinheiten 1200 sowie eine zweite Audioaktivitätserfassungseinheit 1182 zum Erfassen einer Audioaktivität über die externe Schnittstelle 1160.

Die erste mobile Freisprecheinheit 1100 weist eine Steuerschnittstelle 1190 zur drahtlosen, bidirektionalen Kommunikation von Steuersignalen, insbesondere an die mindestens eine zweite mobile Freisprecheinheit 1200 auf. Die Steuerschnittstelle 1190 kann eine I²S-Einheit 1191 und eine Slave-Steuereinheit 1192 aufweisen. Optional können die Steuersignale in die Audiodaten eingebettet sein und somit kann die erste mobile Freisprecheinheit (Master) 1100 über ihre Sende/Empfangseinheit 1150 Steuersignale an die zweiten mobilen Freisprecheinheiten (Slave) 1200 senden und von diesen empfangen. In diesem Fall ist die Steuerschnittstelle 1190 der ersten mobilen Freisprecheinheit 1100 also in die erste Sende-/Empfangseinheit 1150 integriert.

Ferner weist die erste mobile Freisprecheinheit 1100 eine Akkumulatoreinheit 1010 auf, aus welcher die Freisprecheinheit 1100 mobil mit elektrischer Energie versorgt werden kann.

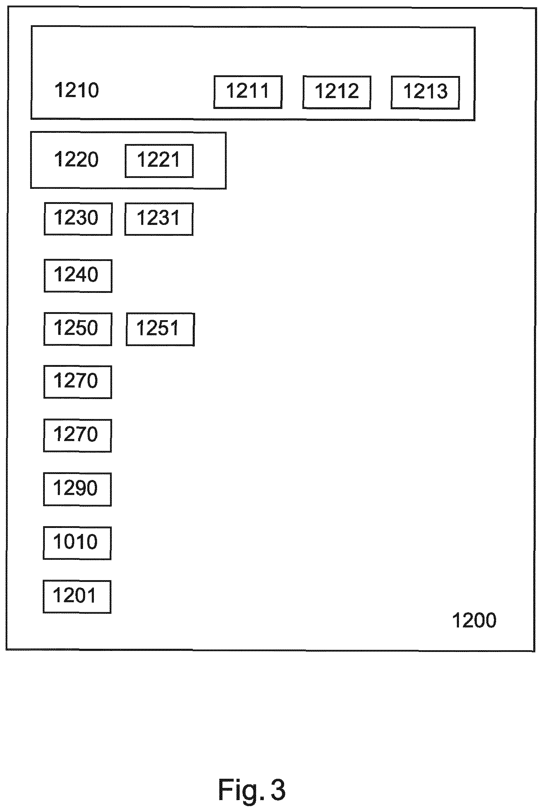

Fig. 3 zeigt ein Blockschaltbild einer zweiten mobilen Freisprecheinheit gemäß einem dritten Ausführungsbeispiel. Die zweite mobile Freisprecheinheit 1200, welche als Slave ausgestaltet ist, weist eine Bedieneinheit 1210 mit einer ersten Leuchteinheit 1211, einem Lautstärkebedienelement 1212 und/oder einem Muting-Bedienelement 1213 auf. Ferner weist die zweite mobile Freisprecheinheit 1200 eine Bodeneinheit 1220 mit einer Leuchteinheit 1221, mindestens ein Mikrofon 1230, mindestens einen Lautsprecher 1240, mindestens eine Sende/Empfangseinheit bzw. eine drahtlose Schnittstelleneinheit 1250 und/oder eine Steuereinheit 1270 auf. Über die Sende/Empfangseinheit 1250 können die über das Mikrofon 1230 erfassten Audiosignale an die erste mobile Freisprecheinheit 1100 drahtlos übermittelt werden. Über die Sende/Empfangseinheit 1250 können wiederzugebende Audiosignale von der ersten mobilen Freisprecheinheit 1100 drahtlos empfangen werden und über den mindestens einen Lautsprecher 1240 wiedergegeben werden. Über die Sende/Empfangseinheit 1250 bzw. über eine entsprechende Untereinheit wie beispielsweise eine Steuersignalempfangseinheit 1251 können Steuersignale von der ersten mobilen Freisprecheinheit 1100 empfangen werden. Diese Signale können dann mittels der Steuereinheit 1270 umgesetzt werden. Beispielsweise kann die Leuchteinheit 1211 und/oder die Leuchteinheit 1221 (z.B. beim Muting der Freisprecheinheiten) aktiviert bzw. ein- und ausgeschaltet werden. Da die Steuerung des Ein- und Ausschaltens der Leuchteinheiten 1211 und 1221 der zweiten mobilen Freisprecheinheiten von der Steuereinheit 1170 der ersten mobilen Freisprecheinheit (Master) 1100 kommt, können die zweiten mobilen Freisprecheinheiten (Slaves) entsprechend der Betriebsart beispielsweise synchron mit der ersten mobilen Freisprecheinheit (Master) 1100 blinken.

Auch die zweite mobile Freisprecheinheit 1200 weist eine Akkumulatoreinheit 1010 auf, aus welcher die Freisprecheinheit 1200 mobil mit elektrischer Energie versorgt werden kann. Optional weist die zweite mobile Freisprecheinheit 1200 eine Steuerschnittstelle 1290 zur drahtlosen, bidirektionalen Kommunikation von Steuersignalen, insbesondere mit der ersten mobilen Freisprecheinheit 1100 auf. Optional können die Steuersignale in die Audiodaten eingebettet sein und somit dient die Sende-/Empfangseinheit 1250 der zweiten mobilen Freisprecheinheit (Slave) 1200 gleichzeitig als Steuerschnittstelle 1290.

Gemäß einem Aspekt der vorliegenden Erfindung kann eine gemeinsame Mute-Funktion für das gesamte Konferenzsystem 1000 bestehend aus einer ersten mobilen Freisprecheinheit (Master) 1100 und mindestens einer zweiten mobilen Freisprecheinheiten (Slave) 1200 vorgesehen sein. Die Mute-Funktion wird hierbei so umgesetzt, dass in einem Zustand "muted" keines der von dem Konferenzsystem 1000 erfassten Mikrofonsignale an die über die zweite Sende-/Empfangseinheit 1160 angeschlossene externe Kommunikationseinheit ausgegeben wird. Die Mastereinheit 1100 enthält das Muting-Bedienelement 1113 und jede Slave-Einheit 1200 ein Muting-Bedienelement 1213. Wird ein Muting-Bedienelement 1213 einer Slave-Einheit 1200 betätigt, so überträgt die Slave-Einheit diese Information in Form eines Muting-Steuerbefehls über die Steuerschnittstelle 1290 der Slave-Einheit an die Steuerschnittstelle 1190 der Master-Einheit. Die Master-Einheit 1100 setzt die Mute-Funktion um, indem sie die Ausgabe von Audiosignalen an die zweite Sende-/Empfangseinheit 1160 der Master-Einheit 1100 unterbricht und somit die Ausgabe von Audiosignalen an die externe Kommunikationseinheit für das gesamte Konferenzsystem 1000 unterbricht. Wird stattdessen das Muting-Bedienelement 1113 der Master-Einheit 1100 betätigt, so kann die Master-Einheit die Mute-Funktion für das gesamte Konferenzsystem 1000 intern umsetzen, indem sie die Ausgabe von Audiosignalen an die zweite Sende-/Empfangseinheit 1160 der Master-Einheit 1100 unterbricht. In beiden Fällen kann die Master-Einheit optional zusätzlich einen entsprechenden Steuerbefehl an alle verbundenen Slave-Einheiten 1200 aussenden, um den neuen Zustand "muted" zu melden. Dieser Zustand kann dann sowohl an der Master-Einheit 1100 über die zugehörige Leuchteinheit 1111 als auch an allen verbundenen Slave-Einheiten 1200 über zugehörige Leuchteinheiten 1211 gleichermaßen angezeigt werden. Die Deaktivierung der Mute-Funktion kann entsprechend der Aktivierung der Mute-Funktion erfolgen. Es kann also wahlweise das Muting-Bedienelement 1113 der Master-Einheit 1100 oder ein Muting-Bedienelement 1213 einer verbundenen Slave-Einheit 1200 betätigt werden und ggf. durch Übertragung entsprechender Steuerbefehle wird die Mastereinheit die Audioausgabe an die zweite Sende-/Empfangseinheit 1160 der Master-Einheit 1100 wieder aktivieren. Der dann erzeugte Zustand "unmuted" kann wieder durch Übertragung entsprechender Steuerbefehle sowohl an der Master-Einheit 1100 über die zugehörige Leuchteinheit 1111 als auch an allen verbundenen Slave-Einheiten 1200 über zugehörige Leuchteinheiten 1211 gelichermaßen angezeigt werden. Es ist also möglich, das ganze Konferenzsystem 1000 über ein beliebiges der beteiligten Muting-Bedienelemente 1113 oder 1213 in den Zustand "muted" zu versetzen und später ggf. über ein anderes der beteiligten Muting-Bedienelemente wieder in den Zustand "unmuted" zu versetzen.

Die Bedieneinheit 1110, 1210 der ersten und zweiten mobilen Freisprecheinheit 1100, 1200 kann beispielsweise zumindest teilweise als ein Touchpad ausgestaltet sein. Wenn beispielsweise ein Anwender das Pairing-Bedienelement 1114 betätigt und beispielsweise sein Mobiltelefon auf die Bedieneinheit 1110 ablegt, dann kann beispielsweise mittels der Bedienelementsteuereinheit 1174 der Steuereinheit 1170 der ersten mobilen Freisprecheinheit 1100 die Bedieneinheit bzw. einige Bedienelemente deaktiviert werden, so lange das Mobiltelefon auf der Bedieneinheit 1110 platziert ist. Hierdurch soll vermieden werden, dass die Bedienelemente 1112, 1113 unbeabsichtigt betätigt werden.

Insbesondere enthält die Zentraleinheit 1100 eine Bedieneinheit 1110, über die der Benutzer ihre Funktionen steuern kann. Beispielsweise kann die Lautstärke der Audiowiedergabe erhöht oder verringert werden oder eine Mute-Funktion für das an das externe Fernkommunikationsgerät auszugebene Mikrofonsignal vorgesehen sein. Für eine komfortable Bedienung ist die Bedieneinheit 1110 vorzugsweise auf der Oberseite der Zentraleinheit 1100 vorgesehen (siehe Fig. 1), optional in Form eines Touchpads. Zusätzlich kann die Oberseite der Zentraleinheit 1100 dazu vorgesehen sein, z.B. ein Smartphone darauf zu legen, um z.B. ein Bluetooth-Pairing über NFC (near field communication) durchzuführen. In diesem Falle wird also das Smartphone auf die Bedieneinheit 1110 der Zentraleinheit 1100 gelegt. Um ungewollte Betätigungen der Bedieneinheit zu verhindern, kann eine automatische Deaktivierung der Bedieneinheit 1110 vorgesehen werden, die solange anhält, wie sich das Smartphone in der NFC-Reichweite (wenige Zentimeter) der Zentraleinheit befindet.

Zum Pairing eines Mobiltelefons mit der ersten mobilen Freisprecheinheit 1100 kann ein Pairing-Bedienelement 1114 betätigt werden. Anschließend kann beispielsweise das zu paarende Mobiltelefon auf die Bedieneinheit 1110 platziert werden. Die Betätigung des Pairing-Bedienelements 1114 kann optional über NFC (nearfield communication) erfolgen. In diesem Falle wird das Mobiltelefon auf die Bedieneinheit 1110 platziert und durch die räumliche Annäherung des Mobiltelefons zu der ersten mobilen Freisprecheinheit 1100 wird eine automatische Betätigung des Pairing-Bedienelements 1114 eingeleitet. Bei Betätigen des Pairing-Bedienelementes 1114 kann eine Pairingeinheit 1172 aktiviert werden. Ferner kann eine Bedienelementsteuereinheit 1174 aktiviert werden, welche das Touchpad 1110 während des Pairingvorganges deaktivieren kann, so dass damit verhindert werden kann, dass durch ein Platzieren eines Mobiltelefones auf die Bedieneinheit 1110 es zu einer versehentlichen Aktivierung einer der Bedienelemente kommt.

Gemäß einem Aspekt der vorliegenden Erfindung kann die erste und/oder zweite mobile Freisprecheinheit 1100, 1200 jeweils einen USB-Anschluss 1101, 1201 in Form einer USB-Buchse aufweisen, über welche die mobile Freisprecheinheit mit Energie versorgt werden kann. Damit kann die mobile Freisprecheinheit betrieben werden, wenn die Akkumulatoreinheit 1010 leer ist.

Gemäß einem Aspekt der vorliegenden Erfindung weist die erste und/oder zweite mobile Freisprecheinheit 1100, 1200 mindestens zwei Mikrofone 1130, 1131, 1230, 1231 auf. Hierbei können jeweils die ersten Mikrofone 1130, 1230 zur Erfassung eines Nutzaudiosignals verwendet werden, während beispielsweise die zweiten Mikrofone 1131, 1231 jeweils zur Erfassung von Lärm bzw. Störaudiosignalen verwendet werden. Mittels dieser erfassten Störaudiosignale kann eine Störreduzierung in den mobilen Freisprecheinheiten 1100, 1200 erreicht werden. Optional können die mobilen Freisprecheinheiten Mikrofon-Arrays mit einer Mehrzahl von Mikrofonen aufweisen, deren Richtcharakteristik optional dynamisch anpassbar ist.

Gemäß der Erfindung kann die erste mobile Freisprecheinheit (Master) 1100 über die zweite Drahtlosschnittstelle 1160 mehrere Audiosignale auf mehreren Kanälen empfangen. Beispielsweise können verschiedene Teilnehmer jeweils einem eigenen Kanal zugeordnet werden. Optional können dann die empfangenen (unterschiedlichen) Audiokanäle über unterschiedliche zweite mobile Freisprecheinheiten (Slave) 1200 wiedergegeben werden. Somit kann beispielsweise ein Teilnehmer bzw. das Audiosignal von ihm über eine der zweiten mobilen Freisprecheinheiten 1200 und ein anderer Teilnehmer über eine andere mobile Freisprecheinheit 1200 wiedergegeben werden. Optional kann die Lautstärke variiert bzw. angepasst werden. Dies kann insbesondere erfolgen, damit die Teilnehmer erkennen können, aus welcher Audioquelle gesprochen wird. Wenn mehr Kanäle als zweite mobile Freisprecheinheiten (Slave-Wiedergabegeräte) 1200 vorgesehen sind, dann können einzelne Kanäle auf die vorhandenen mobilen Freisprecheinheiten über verschiedene Lautstärken auf den einzelnen Freisprecheinheiten im Sinne einer Balance-Regelung verteilt werden.

Wenn somit die erste mobile Freisprecheinheit 1100 ein mehrkanaliges Audioeingangssignal von einer externen Audioquelle über die zweite Drahtlosschnittstelle 1160 empfängt, können die jeweiligen Audiokanäle über einzelne zweite mobile Freisprecheinheiten 1200 wiedergegeben werden. Alternativ dazu können mehrere Kanäle über die zweiten mobilen Freisprecheinheiten 1200 wiedergegeben werden.

Eine zweite Kommunikationsschnittstelle 1160 der ersten mobilen Freisprecheinheit 1100 kann beispielsweise mit einer Voice-Over-IP-Schnittstelle gekoppelt werden. Damit können beispielsweise die Teilnehmer einer Konferenz über eine Voice-Over-IP-Schnittstelle mit der Konferenz verbunden werden. Optional kann mittels der Leuchteinheiten der mobilen Freisprecheinheiten auch ein optisches Feedback erzeugt werden, wenn ein Audiosignal auf dem Audiokanal empfangen wird, welcher durch eine der zweiten mobilen Freisprecheinheiten 1200 wiedergegeben wird.

Gemäß einem Aspekt der vorliegenden Erfindung kann die erste mobile Freisprecheinheit 1100 über die Audiomischeinheit 1180 die von den zweiten mobilen Freisprecheinheiten 1200 empfangen Audiosignale zusammenmischen und dann als ein Gesamtaudiosignal ausgeben oder es kann die empfangenen Audiosignale auf verschiedene Audiokanäle aufteilen und die jeweiligen Audiokanäle ausgeben. So kann beispielsweise ein Audiokanal pro zweite mobile Freisprecheinheit 1200 vorgesehen sein. Damit kann beispielsweise bei anderen Teilnehmern der Konferenz, welche sich nicht im selben Raum befinden, aber beispielsweise dasselbe System benutzen, eine audiokanalspezifische Wiedergabe erfolgen. Damit kann beispielsweise ein akustischer Eindruck der Sitzordnung der Konferenzteilnehmer, welche die erste und mindestens eine zweite mobile Freisprecheinheit verwenden, nachgebildet werden.

Optional kann die Information, um welchen Audiokanal es sich handelt und damit wer gerade spricht, an die externen Teilnehmer der Konferenz ausgegeben werden.

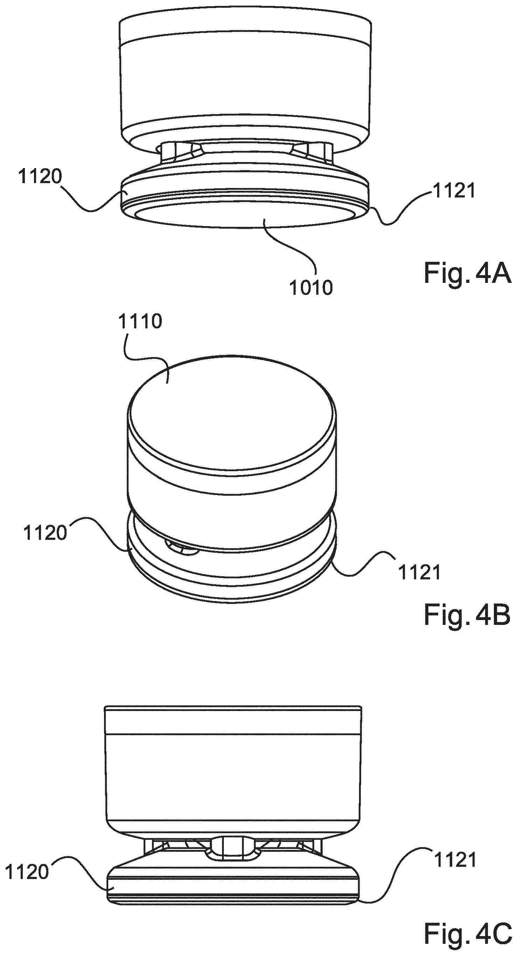

Fig. 4A - Fig. 4C zeigen verschiedene Ansichten einer mobilen Freisprecheinheit gemäß einem vierten Ausführungsbeispiel der Erfindung. In den Figuren 4A- 4C ist insbesondere das Gehäuse der Freisprecheinheit dargestellt. Das in den Figuren 4A - 4C dargestellte Gehäuse ist dasselbe für die erste als auch die zweite mobile Freisprecheinheit 1100, 1200. Die mobile Freisprecheinheit 1100, 1200 weist eine Bodeneinheit 1120 mit einer Leuchteinheit 1121 beispielsweise in Form eines Leuchtringes auf. In oder an der Bodeneinheit 1120 kann ein Akkumulator 1010 vorgesehen sein. Auf der Oberseite der mobilen Freisprecheinheit 1100, 1200 kann eine Bedieneinheit 1110 vorgesehen sein. Die Bedieneinheit 1110 kann beispielsweise als Touchpad ausgestaltet sein. Die Bedieneinheit 1110 kann eine Leuchteinheit 1111, eine Bedienelement für die Lautstärke 1112, ein Bedienelement für ein Muting 1130 sowie optional ein Bedienelement zum Pairing 1114 aufweisen.

Entsprechendes gilt für die zweite mobile Freisprecheinheit 1200. Auch diese kann eine Bodeneinheit 1220 mit einem Leuchtring 1221 und einem Akkumulator 1010 aufweisen.

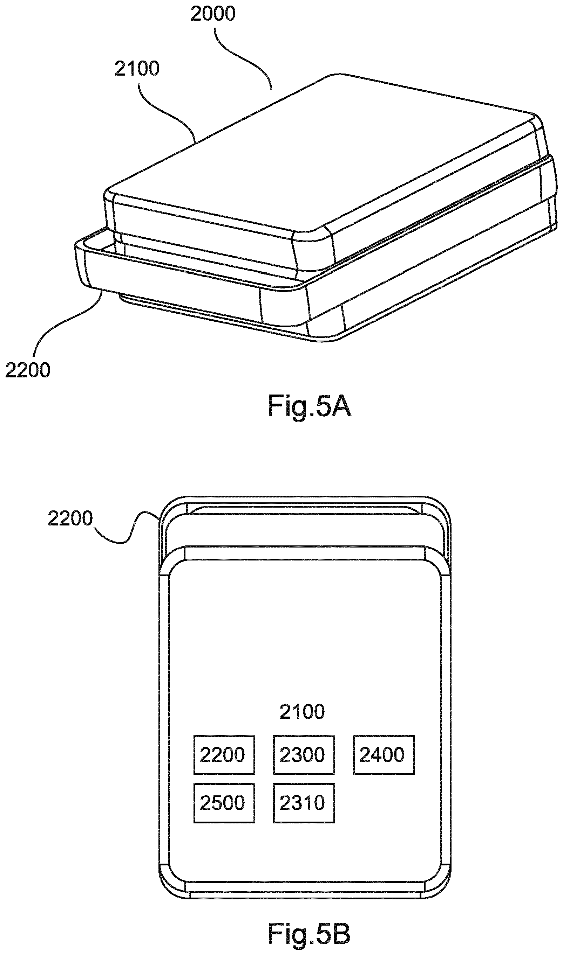

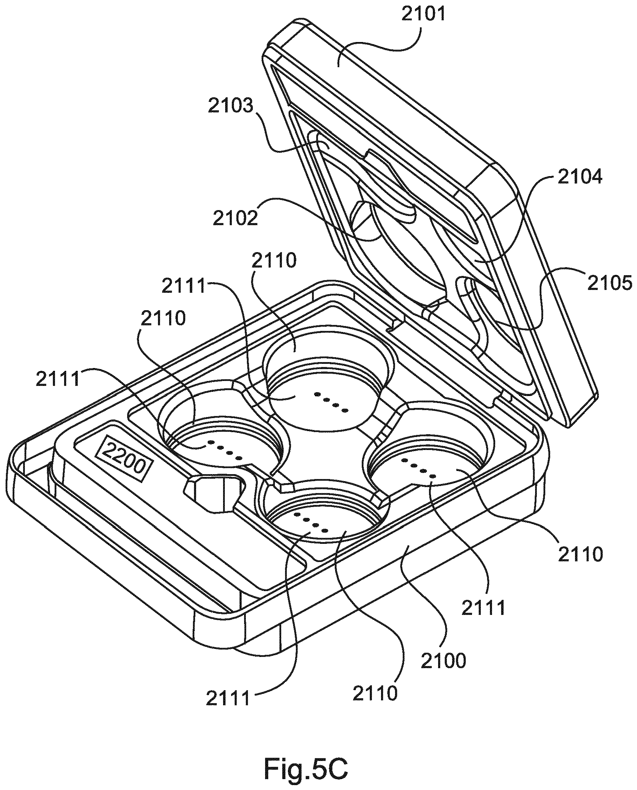

Fig. 5A-5C zeigen jeweils verschiedene Ansichten einer Lade- und Aufbewahrungseinheit 2000 für die mobilen Freisprecheinheiten gemäß der Erfindung. Die Lade- und Aufbewahrungseinheit 2000 weist einen Koffer 2100 mit einem Tragegriff 2200 auf. Der Koffer 2100 weist eine Anzahl von Ladebuchten 2110 auf, welche jeweils elektrische Ladekontakte 2111 aufweisen. Diese elektrischen Ladekontakte 2111 können beispielsweise durch vier elektrisch leitfähige und optional gefederte Pins 2111 dargestellt werden. Die mobilen Freisprecheinheiten 1100, 1200 können zur Aufbewahrung und Aufladung in die Ladebuchten 2110 platziert werden. Insbesondere werden die mobilen Freisprecheinheiten 1100, 1200 mit ihrer Bodeneinheit sowie den darin platzierten Akkus 1010 in die Ladebuchten 2110 platziert, so dass die Ladepins 2111 im elektrischen Kontakt stehen mit den Ladekontakten der Akkumulatoreinheit.

Die elektrischen Ladekontakte 2111 dienen nicht nur zum Aufladen der Akkumulatoreinheit 1010 der mobilen Freisprecheinheit 1100, 1200, sondern auch einem Datenaustausch zwischen den mobilen Freisprecheinheiten 1100, 1200 sowie der Aufbewahrungs- und Ladeeinheit 2000. Somit können beispielsweise Daten hinsichtlich des Ladezustandes der Ackumulatoreinheit 1010 mit der Aufbewahrungs- und Ladeeinheit ausgetauscht werden. Ferner kann mittels der Ladekontakte sowohl eine Aufladung der Akkumulatoreinheit als auch ein Energiefluss in die andere Richtung, nämlich von der Akkumulatoreinheit zu der Lade- und/oder Aufbewahrungseinheit 2000 erfolgen.

Optional weist die Lade- und/oder Aufbewahrungseinheit 2000 eine eigene Akkumulatoreinheit 2200 auf. Desweiteren kann die Lade- und/oder Aufbewahrungseinheit 2000 eine Steuereinheit 2300 aufweisen, welche eine Aufladung der sich in den Ladebuchten 2110 befindlichen mobilen Freisprecheinheiten 1100, 1200 steuert.

Optional können Lade- und Aufbewahrungseinheit 2000 ferner eine Anzeigeeinheit 2400 aufweisen. Die Anzeigeeinheit 2400 kann den Aufladezustand der sich in den Ladebuchten 2110 befindlichen mobilen Freisprecheinheiten 1100, 1200 anzeigen. Insbesondere kann über die Anzeigeeinheit 2400 diejenige Betriebszeit dargestellt werden, mit welcher die mobilen Freisprecheinheiten aufgrund der aktuellen Aufladung der Akkumulatoreinheiten 1010 betrieben werden kann. Damit kann somit die maximale Konferenzdauer angezeigt werden.

Gemäß einem Aspekt der vorliegenden Erfindung ist die Lade- und Aufbewahrungseinheit als ein Koffer mit einem Deckel ausgestaltet.

Die erfindungsgemäße Restlaufanzeige auf der Anzeigeeinheit 2400 kann mittels der Steuereinheit 2300 ermittelt werden. Dazu kann die Steuereinheit 2300 den Ladezustand der Akkumulatoren 1010 der jeweiligen sich in den Ladeschächten 2110 befindlichen mobilen Freisprecheinheiten 1100, 1200 erfassen und die entsprechende maximale Restlaufzeit auf der Anzeigeeinheit 2400 darstellen. Die Lade- und Aufbewahrungseinheit 2000 weist eine Bedieneinheit 2500 auf, mittels welcher beispielsweise die Anzeige der Restlaufzeit initiiert werden kann.

Die Steuereinheit 2300 kann beispielsweise eine Ladekontrolleinheit 2310 aufweisen, welche den Ladezustand der Akkumulatoren der sich in den Ladeschächten 2110 befindlichen mobilen Freisprecheinheiten 1100, 1200 erfasst, denjenigen Ladezustand bestimmt, der am geringsten ist und entsprechend eine Restlaufzeit anzeigt. Hierbei kann diejenige Restlaufzeit angezeigt werden, welche einen vollständigen Betrieb des Konferenzsystems mit allen mobilen Freisprecheinheiten ermöglicht. Die Akkumulatoreinheit 2200 ist optional. Falls diese nicht vorhanden ist, dann kann die Lade- und Aufbewahrungseinheit 2000 die für die Steuereinheit 2300 benötigte Energie aus den Akkumulatoreinheiten 1010 der sich in den Ladeschächten 2110 befindlichen mobilen Freisprecheinheiten 1100, 1200 extrahieren. Optional kann die für die Steuereinheit 2300 benötigte Energie von derjenigen Ackumulatoreinheit 1010 entnommen werden, welche über den höchsten Ladezustand verfügt.

Die Ladekontakte 2111 sind so ausgelegt, dass ein Energiefluss in beide Richtungen möglich ist.

Wenn der Ladekoffer bzw. die Lade- und Aufbewahrungseinheit 2000 an eine externe Energiequelle angeschlossen wird, beispielsweise an das Energieversorgungsnetz mittels einer Steckdose, dann werden die Akkumulatoreinheiten 1010 der sich in den Ladeschächten 2110 befindlichen mobilen Freisprecheinheiten 1100, 1200 geladen. Optional kann die Steuereinheit 2300 dann über die externe Energiequelle mit Energie versorgt werden, d.h. optional wird die Steuereinheit 2300 dann nicht über die sich in dem Koffer befindlichen Akkumulatoreinheiten 1010 mit Energie versorgt.

Gemäß der Erfindung kann bei Aktivierung der Restlaufzeitanzeige auch eine Anzeigeeinheit 1105 in der Bedieneinheit 1110 aktiviert werden. Auf dieser Anzeigeeinheit 1105 kann dann die Restlaufzeit der jeweiligen mobilen Freisprecheinheit 1100, 1200 angezeigt werden. Somit kann der Nutzer bei geöffnetem Ladekoffer sofort den Ladezustand der Akkumulatoren der mobilen Freisprecheinheiten 1100, 1200 erkennen, welche in den Ladeschächten 1110 platziert sind. Damit kann ein Anwender diejenigen mobilen Freisprecheinheiten auswählen, welche über den höchsten Ladezustand verfügen.

Die Anzeigeeinheit 2400 kann außen an der Lade- und Aufbewahrungseinheit 2000 vorgesehen sein, so dass ein Anwender auf schnelle und einfache Art und Weise Informationen über den Ladezustand der sich in der Lade- und Aufbewahrungseinheit 2000 befindlichen mobilen Freisprecheinheiten 1100, 1200 erhält. Dazu muss er also den Ladekoffer nicht öffnen.

Falls die erste mobile Freisprecheinheit 1100 nicht in der Lade- und Aufbewahrungseinheit 2000 platziert ist, dann kann dies über die Anzeigeeinheit 2400 dargestellt werden. Beispielsweise kann eine optische Warnung in Form von blinkenden orangenen LEDs vorgesehen sein.

Optional kann über die Anzeigeeinheit 2400 dargestellt werden, wenn die Ladeschächte 1110 nicht voll besetzt sind. Dies kann beispielsweise so erfolgen, dass der niedrigste Ackuladezustand angezeigt wird und diese Anzeige blinkt.

Gemäß der Erfindung können die mobilen Freisprecheinheiten 1100, 1200 rund ausgestaltet sein und an ihrem Boden über kreisförmige Ladekontakte verfügen, so dass die Kontakte ohne weiteres auf die Ladepins 2111 platziert werden können. Hierbei kommt es dann nicht auf eine exakte rotatorische Positionierung an, da die Ladekontakte 2111 immer auf einen zugehörigen kreisförmigen Ladekontakt treffen.

Optional sind die Ladeschächte 2110 vorzugsweise zylindrisch ausgestaltet, so dass sie zumindest das untere Ende bzw. die Bodeneinheit der mobilen Freisprecheinheiten 1100, 1200 aufnehmen können. Die Ladepins 2111 können beispielsweise federgelagert sein.

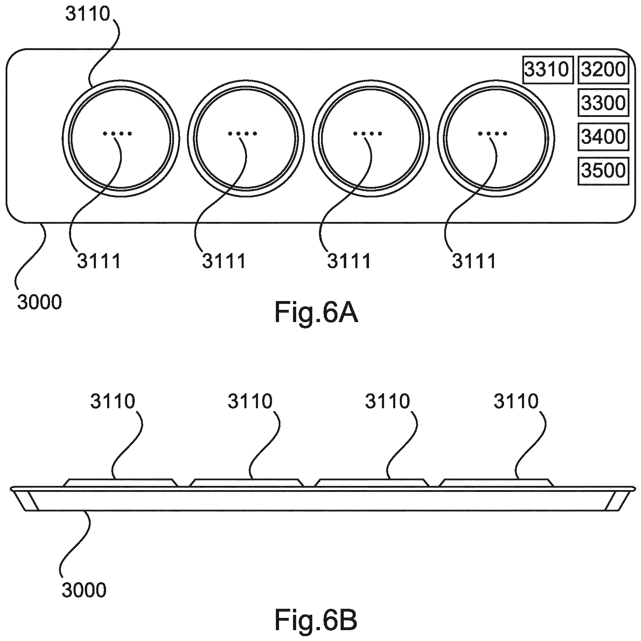

Fig. 6A und 6B zeigen jeweils verschiedene Ansichten einer weiteren Ladeeinheit für die Freisprecheinheiten gemäß der Erfindung. In Fig. 6A und 6B ist eine Ladeeinheit 3000 mit 4 Ladeschächten 3110 für die Freisprecheinheiten 1100, 1200 vorgesehen. In jedem Ladeschacht 3110 sind Ladekontakte 3111 vorgesehen.

Diese elektrischen Ladekontakte 3111 können beispielsweise durch vier elektrisch leitfähige und optional gefederte Pins 3111 darstellen. Die mobilen Freisprecheinheiten 1100, 1200 können zur Aufbewahrung und Aufladung in die Ladebuchten 3110 platziert werden.

Insbesondere werden die mobilen Freisprecheinheiten 1100, 1200 mit ihrer Bodeneinheit sowie den darin platzierten Akkus 1010 in die Ladebuchten 3110 platziert, so dass die Ladepins 3111 im elektrischen Kontakt stehen mit den Ladekontakten der Akkumulatoreinheit.

Die elektrischen Ladekontakte 3111 dienen nicht nur zum Aufladen der Akkumulatoreinheit 1010 der mobilen Freisprecheinheit 1100, 1200, sondern auch einem Datenaustausch zwischen den mobilen Freisprecheinheiten 1100, 1200 sowie der Ladeeinheit 3000. Somit können beispielsweise Daten hinsichtlich des Ladezustandes der Akkumulatoreinheit 1010 mit der Ladeeinheit ausgetauscht werden. Ferner kann mittels der Ladekontakte sowohl eine Aufladung der Akkumulatoreinheit als auch ein Energiefluss in die andere Richtung, nämlich von der Akkumulatoreinheit zu der Lade- und/oder Aufbewahrungseinheit 3000 erfolgen.

Optional weist die Ladeeinheit 3000 eine eigene Akkumulatoreinheit 3200 auf. Desweiteren kann die Lade- und/oder Aufbewahrungseinheit 3000 eine Steuereinheit 3300 aufweisen, welche eine Aufladung der sich in den Ladebuchten 3110 befindlichen mobilen Freisprecheinheiten 1100, 1200 steuert.

Optional kann die Ladeeinheit 3000 ferner eine Anzeigeeinheit 3400 aufweisen. Die Anzeigeeinheit 3400 kann den Aufladezustand der sich in den Ladebuchten 3110 befindlichen mobilen Freisprecheinheiten 1100, 1200 anzeigen. Insbesondere kann über die Anzeigeeinheit 3400 diejenige Betriebszeit dargestellt werden, mit welcher die mobilen Freisprecheinheiten aufgrund der aktuellen Aufladung der Akkumulatoreinheiten 1010 betrieben werden kann. Damit kann somit die maximale Konferenzdauer angezeigt dauer.

Die erfindungsgemäße Restlaufanzeige auf der Anzeigeeinheit 3400 kann mittels der Steuereinheit 3300 ermittelt werden. Dazu kann die Steuereinheit 3300 den Ladezustand der Akkumulatoren 1010 der jeweiligen sich in den Ladeschächten 3110 befindlichen mobilen Freisprecheinheiten 1100, 1200 erfassen und die entsprechende maximale Restlaufzeit auf der Anzeigeeinheit 3400 darstellen. Die Lade- und Aufbewahrungseinheit 3000 weist eine Bedieneinheit 3500 auf, mittels welcher beispielsweise die Anzeige der Restlaufzeit initiiert werden kann.

Die Steuereinheit 3300 kann beispielsweise eine Ladekontrolleinheit 3310 aufweisen, welche den Ladezustand der Akkumulatoren der sich in den Ladeschächten 3110 befindlichen mobilen Freisprecheinheiten 1100, 1200 erfasst, denjenigen Ladezustand bestimmt, der am geringsten ist und entsprechend eine Restlaufzeit anzeigt. Hierbei kann diejenige Restlaufzeit angezeigt werden, welche einen vollständigen Betrieb des Konferenzsystems mit allen mobilen Freisprecheinheiten ermöglicht. Die Akkumulatoreinheit 3200 ist optional. Falls diese nicht vorhanden ist, dann kann die Ladeeinheit 3000 die für die Steuereinheit 3300 benötigte Energie aus den Akkumulatoreinheiten 1010 der sich in den Ladeschächten 3110 befindlichen mobilen Freisprecheinheiten 1100, 1200 extrahieren. Optional kann die für die Steuereinheit 3300 benötigte Energie von derjenigen Akkumulatoreinheit 1010 entnommen werden, welche über den höchsten Ladezustand verfügt.

Die Ladekontakte 3111 sind so ausgelegt, dass ein Energiefluss in beide Richtungen möglich ist.

Wenn die Ladeeinheit 3000 an eine externe Energiequelle angeschlossen wird, beispielsweise an das Energieversorgungsnetz mittels einer Steckdose, dann werden die Akkumulatoreinheiten 1010 der sich in den Ladeschächten 3110 befindlichen mobilen Freisprecheinheiten 1100, 1200 geladen. Optional kann die Steuereinheit 3300 dann über die externe Energiequelle mit Energie versorgt werden, d.h. optional wird die Steuereinheit 3300 dann nicht über die sich in der Ladeeinheit 3000 befindlichen Akkumulatoreinheiten 1010 mit Energie versorgt.

Gemäß der Erfindung kann bei Aktivierung der Restlaufzeitanzeige auch eine Anzeigeeinheit 1105 in der Bedieneinheit 1110 aktiviert werden. Auf dieser Anzeigeeinheit 1105 kann dann die Restlaufzeit der jeweiligen mobilen Freisprecheinheit 1100, 1200 angezeigt werden. Somit kann der Nutzer den Ladezustand der Akkumulatoren der mobilen Freisprecheinheiten 1100, 1200 erkennen, welche in den Ladeschächten 1110 platziert sind. Damit kann ein Anwender diejenigen mobilen Freisprecheinheiten auswählen, welche über den höchsten Ladezustand verfügen.

Die Anzeigeeinheit 3400 kann außen an der Ladeeinheit 3000 vorgesehen sein, so dass ein Anwender auf schnelle und einfache Art und Weise Informationen über den Ladezustand der sich in der Ladeeinheit 3000 befindlichen mobilen Freisprecheinheiten 1100, 1200 erhält.

Falls die erste mobile Freisprecheinheit 1100 nicht in Ladeeinheit 3000 platziert ist, dann kann dies über die Anzeigeeinheit 3400 dargestellt werden. Beispielsweise kann eine optische Warnung in Form von blinkenden orangenen LEDs vorgesehen sein.

Optional kann über die Anzeigeeinheit 3400 dargestellt werden, wenn die Ladeschächte 1110 nicht voll besetzt sind. Dies kann beispielsweise so erfolgen, dass der niedrigste Ackuladezustand angezeigt wird und diese Anzeige blinkt.

Gemäß der Erfindung können die Akkumulatoreinheiten 1010 rund ausgestaltet sein und über kreisförmige Ladekontakte verfügen, so dass diese ohne weiteres auf die Ladepins 3111 platziert werden können. Hierbei kommt es dann nicht auf eine exakte Positionierung an, da die Ladekontakte 3111 immer auf einen zugehörigen kreisförmigen Ladekontakt treffen.

Optional sind die Ladeschächte 3110 vorzugsweise zylindrisch ausgestaltet, so dass sie zumindest das untere Ende bzw. die Bodeneinheit der mobilen Freisprecheinheiten 1100, 1200 aufnehmen können. Die Ladepins 3111 können beispielsweise federgelagert sein.

Gemäß einem Aspekt der vorliegenden Erfindung wird ein mobiles Konferenzsystem mit einer Mehrzahl von mobilen Freisprecheinheiten vorgesehen. Eine der mobilen Freisprecheinheiten fungiert als Master während die anderen mobilen Freisprecheinheiten als Satelliten oder Slaves fungieren. Die Master-Freisprecheinheit kann auch als eine Zentraleinheit angesehen werden. Die Grundfunktion dieser Zentraleinheit besteht darin, einen Audiokontakt zu mindestens einem externen Kommunikationspartner herzustellen und die empfangenen Audiosignale wiederzugeben und aufgezeichnete Audiosignale an den externen Kommunikationspartner auszugeben. Die Verbindung mit einem externen Kommunikationspartner kann über eine Festnetzverbindung, eine Telefonverbindung oder dergleichen erfolgen. Die Zentraleinheit bzw. die Master-Freisprecheinheit stellt optional nicht selber die Kommunikationsverbindung her, sondern dient als Audio-Ein-/Ausgabeeinheit beispielsweise im Sinne einer Freisprecheinheit. Die Kommunikation zwischen der Master-Freisprecheinheit und einem Telefon kann beispielsweise basierend auf einer Bluetooth-Verbindung erfolgen. Damit ist die Master-Freisprecheinheit wie ein Bluetooth-Headset mit einem Mobiltelefon bzw. Smart-Telefon verbunden.

Das mobile Konferenzsystem weist ferner mindestens eine Slave-Freisprecheinheit auf, welche ebenfalls über ein Mikrofon und einen Wiedergabewandler verfügt und drahtlos zur bidirektionalen Audioübertragung mit der Master-Freisprecheinheit verbunden ist. Optional können in dem mobilen Konferenzsystem eine Master-Freisprecheinheit sowie drei Slave-Freisprecheinheiten vorgesehen sein. Diese dienen zur Audiowiedergabe und Audioerfassung in einer guten Qualität. Bei einem größeren Konferenztisch können beispielsweise die Master-Freisprecheinheit sowie eine Anzahl von Slave-Freisprecheinheiten optimal platziert werden.

Das mobile Konferenzsystem weist eine Lade- und Aufbewahrungseinheit zum Aufladen und Aufbewahren bzw. Transportieren der jeweiligen Freisprecheinheiten auf. Damit ist das mobile Konferenzsystem leicht zu transportieren und kann ohne größeren Installationsaufwand und ohne jegliche Verkabelung an einem Konferenzort sofort in Betrieb genommen werden. Es ist keinerlei Infrastruktur vonnöten, welche an dem Konferenzort installiert werden müsste. Sowohl die Master-Freisprecheinheit als auch die Slave-Freisprecheinheiten weisen eine Akkumulatoreinheit für die Energieversorgung auf. Zur Inbetriebnahme des mobilen Konferenzsystems muss lediglich die erste Freisprecheinheit (Master) und die zweite Freisprecheinheit (Slave) auf einem Konferenztisch platziert werden. Ein Nutzer kann die erste Freisprecheinheit (Master) bei seinem Smartphone oder Mobiltelefon als Headset für eine Bluetooth-Kommunikation anmelden. Optional kann dies über eine NFC-Near-Field-Kommunikations-Pairing erfolgen. Damit stellt der Nutzer eine Telefonverbindung über sein Smartphone her, um eine Telefonkonferenz zu starten. Die von dem Smartphone empfangenen Audiosignale werden von den Lautsprechern der ersten Freisprecheinheit (Master) als auch den Lautsprechern der zweiten Freisprecheinheiten (Slaves) wiedergegeben. Die von den Mikrofonen der ersten Freisprecheinheit als auch von den Mikrofonen der zweiten Freisprecheinheiten erfassten Audiosignale werden in der ersten Freisprecheinheit zusammengeführt und an das Mobiltelefon übertragen.

Das mobile Konferenzsystem weist eine Lade- und Aufbewahrungseinheit in Form eines Ladekoffers auf, welcher sowohl für den Transport als auch der Aufladung der Akkus der ersten und zweiten mobilen Freisprecheinheit ausgestaltet ist. Der Ladekoffer kann zur Aufladung der mobilen Freisprecheinheiten an eine externe Energiequelle wie beispielsweise an eine Steckdose angeschlossen werden. Die mobilen Freisprecheinheiten können jeweils in einem Ladeschacht platziert werden und entsprechend aufgeladen werden. Die Ladekontakte des Ladekoffers sowie die elektrischen Kontakte der Akkumulatoreinheiten ermöglichen eine Energieübertragung in beide Richtungen sowie eine Datenübertragung in beide Richtungen.

Typischerweise werden bei der Initiierung des mobilen Konferenzsystems die erste mobile Freisprecheinheit sowie die gewünschte Anzahl von zweiten mobilen Freisprecheinheiten aus dem Koffer entnommen und auf dem Konferenztisch platziert. Optional kann die mobile Freisprecheinheit bei Entnahme aus dem Koffer aktiviert werden.

Gemäß einem Aspekt der vorliegenden Erfindung können zweite mobile Freisprecheinheiten (Slave, Satellit) auch während des Betriebes des mobilen Konferenzsystems angemeldet werden und somit zu dem mobilen Konferenzsystem dazu geschaltet werden. Dies kann durch die Steuereinheit 1170 der ersten Freisprecheinheit 1100 und insbesondere durch die Slave-Synchronisationseinheit 1175 gesteuert werden. Dazu kann beispielsweise eine der zweiten mobilen Freisprecheinheiten aus dem Ladekoffer entnommen und auf einem Konferenztisch platziert werden. Hierbei nimmt die zweite mobile Freisprecheinheit 1200 über die drahtlose Schnittstelle Kontakt zu der Zentraleinheit auf und meldet sich dort an. Dann kann die Steuereinheit 1170 der ersten mobilen Freisprecheinheit die neu dazu gekommene zweite mobile Freisprecheinheit ohne Unterbrechung der Konferenz aktivieren. Insbesondere empfängt die zweite Freisprecheinheit 1200 Audiosignale von der ersten Freisprecheinheit und überträgt Audiosignale an die erste Freisprecheinheit 1100. Wenn eine neue zweite Freisprecheinheit zu der mobilen Konferenz dazu kommen soll, dann muss die erste Freisprecheinheit die Audiosignale von der neuen zweiten Freisprecheinheit empfangen und mit den anderen Audiosignalen von den anderen zweiten Freisprecheinheiten zusammen mischen. Ferner muss die erste Freisprecheinheit die von der externen Einheit empfangenen Audiosignale auch an die neue zweite Freisprecheinheit verteilen. Zusätzlich kann bei der Aktivierung der neu dazu gekommenen zweiten mobilen Freisprecheinheit 1200 ein Austausch von Steuersignalen zwischen der ersten Freisprecheinheit 1100 und der neu dazu gekommenen zweiten Freisprecheinheit 1200 erfolgen, um einen Zustand des Gesamtsystems an die neu dazu gekommene zweite Freisprecheinheit zu übertragen. Wenn das System beispielsweise im Zustand "muted" ist, so kann die neu angemeldete zweite Freisprecheinheit diesen Zustand gleichermaßen wie die erste Freisprecheinheit einnehmen und dies anzeigen.

Wenn optional eine der zweiten mobilen Freisprecheinheiten 1200 nicht mehr benötigt wird, dann kann diese ohne Unterbrechung der Konferenz deaktiviert werden. Dies kann beispielsweise von Vorteil sein, wenn die Energie in dem Akku eines der zweiten mobilen Freisprecheinheiten während der Konferenz zur Neige geht. Die zweite mobile Freisprecheinheit kann sich dann beispielsweise selber abschalten. Alternativ kann die Kommunikation beendet werden, wenn die zweite mobile Freisprecheinheit in dem Ladekoffer platziert wird. Dies kann beispielsweise durch die Aufbewahrungs- und Ladeeinheit 2000 erfasst werden und an die erste mobile Freisprecheinheit übertragen werden. Alternativ dazu kann dies auch über die zweite mobile Freisprecheinheit an die erste mobile Freisprecheinheit übertragen werden.

Gemäß einem Aspekt der vorliegenden Erfindung ist sowohl die erste als auch die zweiten mobilen Freisprecheinheiten 1100, 1200 mit einer Leuchteinheit 1121, 1221 vorgesehen. Die erste und zweite mobile Freisprecheinheit bzw. das mobile Konferenzsystem können über verschiedene Betriebsarten verfügen. Eine erste Betriebsart kann die verbundene Betriebsart (die Verbindung zwischen dem Master und den Slaves ist aktiv) darstellen, eine zweite Betriebsart kann die nichtverbundene Betriebsart (es besteht keine Verbindung) darstellen, eine dritte Betriebsart kann eine gemutete Konferenz (die Freisprecheinheiten sind gemutet) und eine vierte Betriebsart kann eine freigegebene Konferenz darstellen. Diese vier Betriebsarten können optisch mittels der Leuchteinheiten 1121, 1221 dargestellt werden. Hierbei können unterschiedliche Lichtfarben und unterschiedliche Leuchtdauern bzw. Blinken des Lichts verwendet werden. Damit kann auf einfache Art und Weise dem Nutzer die entsprechende Betriebsart, z.B. gemutet, des mobilen Konferenzsystems dargestellt werden.

Gemäß der Erfindung können zwischen der ersten mobilen Freisprecheinheit und den zweiten mobilen Freisprecheinheiten Steuersignale beispielsweise über die Steuerschnittstelle 1190 ausgetauscht werden. Gemäß der Erfindung kann somit die Steuereinheit 1170 und insbesondere die Einheit 1171 bzw. die Betriebssteuereinheit 1176 und die Leuchtensteuereinheit 1177 sowohl die Betriebsart als auch die Steuerung der Leuchteinheiten 1121, 1221 steuern.

Gemäß einem Aspekt der vorliegenden Erfindung kann ein synchrones Blinken der Leuchteinheiten 1121, 1221 vorgesehen werden. Dies kann mittels der synchronen Blinkeinheit 1171 erfolgen.

## Patentansprüche

1. Mobiles Konferenzsystem (1000), mit
einer ersten mobilen Freisprecheinheit (1100), die als Zentraleinheit fungiert, und mindestens einer zweiten mobilen Freisprecheinheit (1200), die als Satellit der Zentraleinheit fungiert,
wobei die erste und die zweite mobile Freisprecheinheit jeweils mindestens ein Mikrofon (1130, 1230) zur Erfassung von Audiosignalen, einen Lautsprecher (1140, 1240) zur Wiedergabe von wiederzugebenen Audiosignalen, eine Akkumulatoreinheit (1010) zur Energieversorgung, eine Bedieneinheit (1110, 1210), ein Muting-Bedienelement (1113, 1213), eine Steuerschnittstelle (1190, 1290) zur drahtlosen bidirektionalen Übertragung von Steuerbefehlen, eine Steuereinheit (1170, 1270), mindestens eine Leuchteinheit (1121, 1221), und eine erste Sende/Empfangseinheit (1150, 1250) zur bidirektionalen drahtlosen Kommunikation zwischen der ersten und der mindestens einen zweiten mobilen Freisprecheinheit (1100, 1200) aufweisen,
wobei die erste mobile Freisprecheinheit (1100) eine zweite Sende/Empfangseinheit (1160) zur drahtlosen bidirektionalen Audio-Kommunikation mit einer externen Fernkommunikationseinheit aufweist,
wobei die erste mobile Freisprecheinheit (1100) dazu ausgestaltet ist, Audiosignale, welche über die zweite Sende/Empfangseinheit (1160) von der externen Fernkommunikationseinheit empfangen wurden, durch die erste Sende/Empfangseinheit (1150) drahtlos an die zweite mobile Freisprecheinheit (1200) zu übertragen,
wobei die erste mobile Freisprecheinheit (1100) eine Audiomischeinheit (1180) aufweist, die dazu ausgestaltet ist, Audiosignale, welche über die erste Sende/Empfangseinheit (1150) von der zweiten mobilen Freisprecheinheit (1200) empfangen wurden, mit über das mindestens eine Mikrofon (1130) der ersten mobilen Freisprecheinheit (1100) erfassten Audiosignalen zu mischen und durch die zweite Sende/Empfangseinheit (1160) drahtlos an die externe Fernkommunikationseinheit zu senden,
wobei die mindestens eine zweite mobile Freisprecheinheit (1200) dazu ausgestaltet ist, auf eine Betätigung ihres Muting-Bedienelements (1213) hin einen Muting-Steuerbefehl über die Steuerschnittstelle (1290) der mindestens einen zweiten mobilen Freisprecheinheit an die Steuerschnittstelle (1190) der ersten mobilen Freisprecheinheit zu übertragen, und wobei die erste mobile Freisprecheinheit (1100) dazu ausgestaltet ist, auf den Empfang des Muting-Steuerbefehls hin eine gemeinsame Mute-Funktion für das mobile Konferenzsystem (1000) umzusetzen, indem sie die Ausgabe der von den Mikrofonen erfassten Audiosignale durch die zweite Sende/Empfangseinheit (1160) an die externe Fernkommunikationseinheit unterbricht.

2. Mobiles Konferenzsystem nach Anspruch 1, wobei
die Steuereinheit (1170) der ersten mobilen Freisprecheinheit (1100) zum Steuern eines Betriebs einer mobilen Konferenz ausgestaltet ist, und
wobei die Steuereinheit (1170) der ersten mobilen Freisprecheinheit (1100) dazu ausgestaltet ist, über ihre Steuerschnittstelle (1190) eine Anmeldung einer weiteren, neu zu der mobilen Konferenz dazu kommenden zweiten mobilen Freisprecheinheit (1200) zu empfangen und die weitere zweite mobile Freisprecheinheit (1200) zu aktivieren und zu der mobilen Konferenz dazu zu schalten, so dass die weitere zweite mobile Freisprecheinheit (1200) ohne Unterbrechung der mobilen Konferenz Audiosignale von der ersten mobilen Freisprecheinheit (1100) empfängt und Audiosignale an die erste mobile Freisprecheinheit (1100) überträgt.

3. Mobiles Konferenzsystem nach Anspruch 1 oder 2, wobei
die Steuereinheit (1170) der ersten mobilen Freisprecheinheit (1100) zum Steuern der Leuchteinheiten (1121, 1221) der ersten und zweiten mobilen Freisprecheinheit (1100, 1200) in Abhängigkeit einer Betriebsart des mobilen Konferenzsystems ausgestaltet ist.

4. Mobiles Konferenzsystem nach Anspruch 1, 2 oder 3, wobei
die Steuereinheit (1170) der ersten mobilen Freisprecheinheit (1100) zum Steuern eines Pairings der ersten mobilen Freisprecheinheit (1100) mit einem externen mobilen Telekommunikationsgerät ausgestaltet ist,
wobei die Bedieneinheit (1110) der ersten mobilen Freisprecheinheit (1100) auf einer Oberseite der ersten mobilen Freisprecheinheit (1100) angeordnet ist,
wobei das Pairing dadurch initiiert wird, dass das externe mobile Telekommunikationsgerät auf der Oberseite der ersten mobilen Freisprecheinheit (1100) positioniert wird,
wobei die Steuereinheit (1170) der ersten mobilen Freisprecheinheit (1100) dazu ausgestaltet ist, die Bedieneinheit (1110) der ersten mobilen Freisprecheinheit (1100) für die Dauer des Pairingvorgangs zu deaktivieren.

5. Mobiles Konferenzsystem nach einem der Ansprüche 1 bis 4, ferner mit
einer Lade- und Aufbewahrungseinheit (2000) mit einer Mehrzahl von Ladeschächten (2110),
wobei ein Ladeschacht für die erste mobile Freisprecheinheit (1100) und mindestens ein Ladeschacht für eine zweite mobile Freisprecheinheit (1200) vorgesehen ist.

6. Mobiles Konferenzsystem nach Anspruch 5,
wobei die Akkumulatoreinheiten (1010) der ersten und zweiten mobilen Freisprecheinheiten jeweils freiliegende ringförmige Ladekontakte aufweisen, und
wobei die Ladeschächte (2110) zylinderförmig ausgestaltet sind und jeweils eine Mehrzahl von Ladekontakten (2111) in Form von Ladepins (2111) zur Kontaktierung der ringförmigen Ladekontakte der Akkumuiatoreinheiten (1010) der ersten oder zweiten mobilen Freisprecheinheiten (1100, 1200) aufweisen.

7. Mobiles Konferenzsystem nach Anspruch 5 oder 6, wobei
die Lade- und Aufbewahrungseinheit (2000) eine Steuereinheit (2300) zur Erfassung von Ladezuständen der Akkumulatoreinheiten (1010) von sich in den Ladeschächten (2110) befindlich mobilen Freisprecheinheiten (1100, 1200) und zum Darstellen einer entsprechenden maximalen Restlaufzeit basierend auf den erfassten Ladezuständen aufweist.

8. Mobiles Konferenzsystem nach einem der vorherigen Ansprüche,
wobei die gemeinsame Mute-Funktion für das mobile Konferenzsystem (1000) an jeder der ersten und zweiten Freisprecheinheiten (1100, 1200) durch Betätigung des jeweiligen Muting-Bedienelements (1113, 1213) aktiviert und/oder deaktiviert werden kann.

9. Mobiles Konferenzsystem nach einem der vorherigen Ansprüche,
wobei die erste mobile Freisprecheinheit (1100) dazu ausgestaltet ist, einen entsprechenden Steuerbefehl an alle verbundenen zweiten mobilen Freisprecheinheiten (1200) auszusenden, um einen Zustand "muted" zu melden, wenn die gemeinsame Mute-Funktion für das mobile Konferenzsystem (1000) aktiviert wurde, und
wobei sowohl die erste mobile Freisprecheinheit (1100) als auch die verbundenen zweiten mobilen Freisprecheinheiten (1200) dazu ausgestaltet sind den Zustand "muted" anzuzeigen.

## Claims

1. Mobile conference system (1000), comprising
a first mobile hands-free unit (1100) which serves as central unit and at least one second mobile hands-free unit (1200) which serves as satellite of the central unit,
wherein the first and second mobile hands-free unit each have at least one microphone (1130, 1230) for recording audio signals, a loudspeaker (1140, 1240) for playing back audio signals to be played back, a battery unit (1010) for supplying energy, an operating unit (1110, 1210), a muting operating element (1113, 1213), a control interface (1190, 1290) for wireless bidirectional transmission of control commands, a control unit (1170, 1270), at least one lighting unit (1121, 1221), and a first transmitting/receiving unit (1150, 1250) for bidirectional wireless communication between the first and the at least one second mobile hands-free unit (1100, 1200),
wherein the first mobile hands-free unit (1100) comprises a second transmitting/receiving unit (1160) for wireless bidirectional audio communication with an external remote communication unit,
wherein the first mobile hands-free unit (1100) is configured to wirelessly transmit audio signals which were received from the external remote communication unit by means of the second transmitting/receiving unit (1160), to the second mobile hands-free unit (1200) by means of the first transmitting/receiving unit (1150),
wherein the first mobile hands-free unit (1100) comprises an audio mixing unit (1180) which is configured to mix audio signals which were received from the second mobile hands-free unit (1200) by means of the first transmitting/receiving unit (1150) with audio signals recorded by means of the at least one microphone (1130) of the first mobile hands-free unit (1100) and to wirelessly transmit said audio signals to the external remote communication unit by means of the second transmitting/receiving unit (1160),
wherein the at least one second mobile hands-free unit (1200) is configured to transmit, in response to an actuation of its muting operating element (1213) a muting control command via the control interface (1290) of the at least one second mobile hands-free unit to the control interface (1190) of the first mobile hands-free unit and wherein the first mobile hands-free unit (1100) is configured to provide in response to the receipt of the muting control command a common mute function for the entire mobile conference system (1000) by interrupting the output of the audio signals recorded by the microphones to the external remote communication unit by means of the second transmitting/receiving unit (1160).

2. The mobile conference system according to claim 1, wherein
the control unit (1170) of the first mobile hands-free unit (1100) is configured for controlling an operation of a mobile conference,
wherein the control unit (1170) of the first mobile hands-free unit (1100) is configured to receive a registration of a second hands-free mobile unit (1200) coming new to the mobile conference via the control interface (1190) and to activate the further second mobile hands-free unit and to switch the further second mobile hands-free unit (1200) to the mobile conference so that the further second mobile hands-free unit (1200) receives audio signals without interrupting of the mobile conference from the first mobile hands-free unit (1100) and transmits audio signals to the first hands-free unit (1100).

3. The mobile conference system according to claim 1, wherein
the control unit (1170) of the first mobile hands-free unit (1100) is configured for controlling the lighting units (1121, 1221) of the first and second hands-free unit (1100, 1200) depending on an operating mode of the mobile conference system.

4. The mobile conference system according to claims 1, 2 or 3, wherein
the control unit (1170) of the first mobile hands-free unit (1100) is configured for controlling a pairing of the first mobile hands-free unit (1100) with an external mobile telecommunications device,
wherein the operating unit (1100) of the first mobile hands-free unit (1100) is disposed on an upper side of the first mobile hands-free unit (1100),
wherein the pairing it initiated by positioning the external mobile telecommunications device on the upper side of the first mobile hands-free unit (1100),
wherein the control unit (1700) of the first mobile hands-free unit (1100) is configured to deactivate the operating unit (1110) of the first mobile hands-free unit (1100) for the duration of the pairing process.

5. The mobile conference system according to one of claims 1 to 4, further comprising a charging and storage unit (2000) having a plurality of charging slots (2110),
wherein one charging slot is provided for the first mobile hands-free unit (1100) and at least one charging slot is provided for a second mobile hands-free unit (1200).

6. The mobile conference system according to claim 5, wherein the battery units (1010) of the first and second mobile hands-free units each comprise exposed annular charging contacts, and
wherein the charging slots (2110) are configured cylindrical and each comprise a plurality of charging contacts (2111) in the form of charging pins (2111) for contacting the annular charging contacts of the battery units (1010) of the first or second mobile hands-free units (1100, 1200).

7. The mobile conference system according to claim 6, wherein
the charging and storage unit (2000) has a control unit (2300) for recording charging states of the battery units (1010) of the mobile hands-free units (1100, 1200) located in the charging slots (2110) and for displaying a corresponding maximum time remaining based on the recorded charging states.

8. Mobile conference system according to one of the preceding claims,
wherein the common mute function for the mobile conference system (1000) can be activated or deactivated at each of the first and second hands-free units (1100, 1200) by activating the corresponding muting operating elements (1113, 1213).

9. Mobile conference system according to one of the preceding claims,
wherein the first mobile hands-free unit (1100) is configured to send a respective control command to all of the connected second mobile hands-free units (1200) to notify the condition "muted" when the common mute function is activated for the mobile conference system (1000), and
wherein the first mobile hands-free unit (1100) as well as the connected second mobile hands-free units (1200) are configured to display the condition "muted".

## Revendications

1. Système de conférence mobile (1000), avec
une première unité mains libres mobile (1100), qui sert d'unité centrale, et au moins une deuxième unité mains libres mobile (1200), qui sert de satellite de l'unité centrale,
dans lequel la première et la deuxième unité mains libres mobile présentent respectivement au moins un microphone (1130, 1230) pour la détection de signaux audio, un haut-parleur (1140, 1240) pour la restitution de signaux audio à restituer, une unité accumulateur (1010) pour l'alimentation en énergie, une unité de service (1110, 1210), un élément de service de sourdine (1113, 1213), une interface de commande (1190, 1290) pour la transmission bidirectionnelle sans fil d'instructions de commande, une unité de commande (1170, 1270), au moins une unité d'éclairage (1121, 1221), et une première unité d'émission/réception (1150, 1250) pour la communication sans fil bidirectionnelle entre la première et l'au moins une deuxième unité mains libres mobile (1100, 1200),
dans lequel la première unité mains libres mobile (1100) présente une deuxième unité d'émission/réception (1160) pour la communication audio bidirectionnelle sans fil avec une unité de communication à distance externe,
dans lequel la première unité mains libres mobile (1100) est configurée pour transmettre des signaux audio, lesquels ont été reçus par le biais de la deuxième unité d'émission/réception (1160) de l'unité de communication à distance externe, par la première unité d'émission/réception (1150) sans fil à la deuxième unité mains libres mobile (1200),
dans lequel la première unité mains libres mobile (1100) présente une unité de mixage audio (1180) qui est configurée pour mixer des signaux audio, lesquels ont été reçus par le biais de la première unité d'émission/réception (1150) de la deuxième unité mains libres mobile (1200), avec des signaux audio détectés par le biais de l'au moins un microphone (1130) de la première unité mains libres mobile (1100) et pour les envoyer sans fil à l'unité de communication à distance externe par la deuxième unité d'émission/réception (1160),
dans lequel l'au moins une deuxième unité mains libres mobile (1200) est configurée pour transmettre lors d'un actionnement de son élément de service de sourdine (1213) un ordre de commande de sourdine à l'interface de commande (1190) de la première unité mains libres mobile par le biais de l'interface de commande (1290) de l'au moins une deuxième unité mains libres mobile, et dans lequel la première unité mains libres mobile (1100) est configurée pour convertir lors de la réception de l'ordre de commande de sourdine une fonction de sourdine commune pour le système de conférence mobile (1000), en interrompant l'émission des signaux audio détectés par le microphone par la deuxième unité d'émission/réception (1160) à l'unité de communication à distance externe.

2. Système de conférence mobile selon la revendication 1, dans lequel
l'unité de commande (1170) de la première unité mains libres mobile (1100) est configurée pour la commande d'un fonctionnement d'une conférence mobile, et
dans lequel l'unité de commande (1170) de la première unité mains libres mobile (1100) est configurée pour recevoir par le biais de son interface de commande (1190) une connexion d'une autre deuxième unité mains libres mobile (1200) s'ajoutant nouvellement à la conférence mobile et pour activer l'autre deuxième unité mains libres mobile (1200) et pour passer à la conférence mobile de sorte que l'autre deuxième unité mains libres mobile (1200) reçoive des signaux audio de la première unité mains libres mobile (1100) et transmette des signaux audio à la première unité mains libres mobile (1100) sans interruption de la conférence mobile.

3. Système de conférence mobile selon la revendication 1 ou 2, dans lequel
l'unité de commande (1170) de la première unité mains libres mobile (1100) est configurée pour la commande des unités d'éclairage (1121, 1221) de la première et deuxième unité mains libres mobile (1100, 1200) en fonction d'un mode de fonctionnement du système de conférence mobile.

4. Système de conférence mobile selon la revendication 1, 2 ou 3, dans lequel
l'unité de commande (1170) de la première unité mains libres mobile (1100) est configurée pour la commande d'un appairage de la première unité mains libres mobile (1100) avec un appareil de télécommunication mobile externe,
dans lequel l'unité de service (1100) de la première unité mains libres mobile (1100) est agencée sur un côté supérieur de la première unité mains libres mobile (1100),
dans lequel l'appairage est initié par le fait que l'appareil de télécommunication mobile externe est positionné sur le côté supérieur de la première unité mains libres mobile (1100),
dans lequel l'unité de commande (1170) de la première unité mains libres mobile (1100) est configurée pour désactiver l'unité de service (1100) de la première unité mains libres mobile (1100) pour la durée de l'opération d'appairage.

5. Système de conférence mobile selon l'une quelconque des revendications 1 à 4, en outre avec
une unité de charge et de conservation (2000) avec une pluralité de baies de charge (2110),
dans lequel une baie de charge est prévue pour la première unité mains libres mobile (1100) et au moins une baie de charge est prévue pour une deuxième unité mains libres mobile (1200).

6. Système de conférence mobile selon la revendication 5,
dans lequel les unités accumulateur (1010) des première et deuxième unités mains libres mobiles présentent respectivement des contacts de charge annulaires dénudés, et
dans lequel les baies de charge (2110) sont configurées sous forme cylindrique et présentent respectivement une pluralité de contacts de charge (2111) en forme de broches de charge (2111) pour la mise en contact des contacts de charge annulaires des unités accumulateur (1010) des première et deuxième unités mains libres mobiles (1100, 1200).

7. Système de conférence mobile selon la revendication 5 ou 6, dans lequel
l'unité de charge et de conservation (2000) présente une unité de commande (2300) pour la détection d'états de charge des unités accumulateur (1010) d'unités mains libres mobiles (1100, 1200) se trouvant dans les baies de charge (2110) et pour la représentation d'un temps de fonctionnement restant maximum correspondant sur la base des états de charge détectés.

8. Système de conférence mobile selon l'une quelconque des revendications précédentes,
dans lequel la fonction de sourdine commune pour le système de conférence mobile (1000) peut être activée et/ou désactivée au niveau de chacune des première et deuxième unités mains libres (1100, 1200) par actionnement de l'élément de service de sourdine respectif (1113, 1213).

9. Système de conférence mobile selon l'une quelconque des revendications précédentes,
dans lequel la première unité mains libres mobile (1100) est configurée pour émettre un ordre de commande correspondant à toutes les deuxièmes unités mains libres mobiles (1200) reliées afin de signaler un état « en sourdine », lorsque la fonction de sourdine commune a été activée pour le système de conférence mobile (1000), et
dans lequel aussi bien la première unité mains libres mobile (1100) que les deuxièmes unités mains libres mobiles (1200) reliées sont configurées pour afficher l'état « en sourdine ».
